Europäisches Patentamt

(19) European Patent Office

Office européen des brevets

(11) Numéro de publication: **0 122 848**
**B2**

(12) **NOUVEAU FASCICULE DE BREVET EUROPEEN**

(45) Date de publication du nouveau fascicule du brevet: **09.01.91**

(21) Numéro de dépôt: **84400673.4**

(22) Date de dépôt: **05.04.84**

(51) Int. Cl.⁵: **F 16 L 41/08, B 21 D 39/04**

(54) Procédé de formation d'un raccordement hydraulique.

(30) Priorité: **13.04.83 FR 8306007**

(43) Date de publication de la demande:
**24.10.84 Bulletin 84/43**

(45) Mention de la délivrance du brevet:
**03.06.87 Bulletin 87/23**

(45) Mention de la decision concernant l'opposition:
**09.01.91 Bulletin 91/02**

(84) Etats contractants désignés:
**DE GB IT SE**

(56) Documents cités:
**FR-A-1 193 852**
**FR-A-2 508 138**
**US-A-2 112 673**
**US-A-3 064 707**
**US-A-4 192 531**

**ATE- Kurzkatalog 6/78**

(73) Titulaire: **BENDIX France**
**126, rue de Stalingrad**
**F-93700 Drancy (FR)**

(72) Inventeur: **Côme, Philippe**
**16, rue Louise Borme**
**F-77230 Dammartin en-Goelle (FR)**
Inventeur: **Vasselet, Joel**
**45, rue Paul Cavaré**
**F-93110 Rosny sous Bois (FR)**

(74) Mandataire: **Lejet, Christian et al**
**BENDIX FRANCE Division Technique Service**
**Brevets Bendix Europe 126 rue de Stalingrad**
**F-93700 Drancy (FR)**

Courier Press, Leamington Spa, England.

## Description

La présente invention concerne un procédé de formation d'un raccordement hydraulique sur un corps creux et plus particulièrement un tel raccordemente sur un élément tubulaire en métal extrudé.

Pour des raisons d'économie, il est souhaitable que la paroi d'un élément tubulaire extrudé soit mince, ce qui présente toutefois des inconvénients, parce que l'on ne peut pas former un raccordement hydraulique directement dans la paroi.

Le document US—A—3 064 707 décrit un procédé de formation d'un raccordement hydraulique sur un corps creux par montage d'un élément sur une protubérance faisant saillie extérieurement par rapport à la paroi du corps. Une collerette radiale est d'abord formée sur l'élément destiné à venir en butée avec le bord de la protubérance quand l'élément est monté sur le corps. L'élément est ensuite soudé en place.

La présente invention a pour object de proposer un moyen de former un raccordement hydraulique, sur un corps creux, qui est étanche, de configuration simple et fiable.

Pour ce faire, l'invention propose un procédé tel que décrit dans la revendication 1 dont le préambule est conforme à l'enseignement de FR—A—1 193 852.7.

D'autres caractéristiques et avantages de la présente invention ressortiront de la description suivante de modes de réalisation faite en relation avec les dessins annexés sur lesquels:

la figure 1 est une vue en plan d'un maître-cylindre pourvu d'un raccordement hydraulique selon l'invention;

la figure 2 est une vue en bout du maître-cylindre de la figure 1;

la figure 3 est une vue en coupe transversale d'une étape intermédiaire de a formation d'un raccordement hydraulique selon l'invention;

la figure 4 est une vue du mode de réalisation analogue à la figure 3 montrant la configuration finale du raccordement;

la figure 5 est une vue en plan d'un premier mode de réalisation d'un élément de connexion pour la réalisation d'un raccordement hydraulique selon l'invention;

la figure 6 est une vue en coupe transversale de l'élément d'interconnexion de la figure 5;

la figure 7 est une vue en plan d'un raccordement hydraulique des figures 5 et 6 monoté sur un maître-cylindre;

la figure 8 est une vue en coupe transversale de l'élément de la figure 7;

la figures 9 et 10 sont des vues en plan respectives de deux autres modes de réalisation d'un raccordement selon l'invention; et

les figures 11 et 12 sont respectivement des vues en coupe transversale des raccordements des figures 9 et 10;

la figure 13 est une vue en coupe transversale d'un cinquième mode de réalisation avant sertissage;

la figure 14 est une vue agrandie de la figure 13 après sertissage.

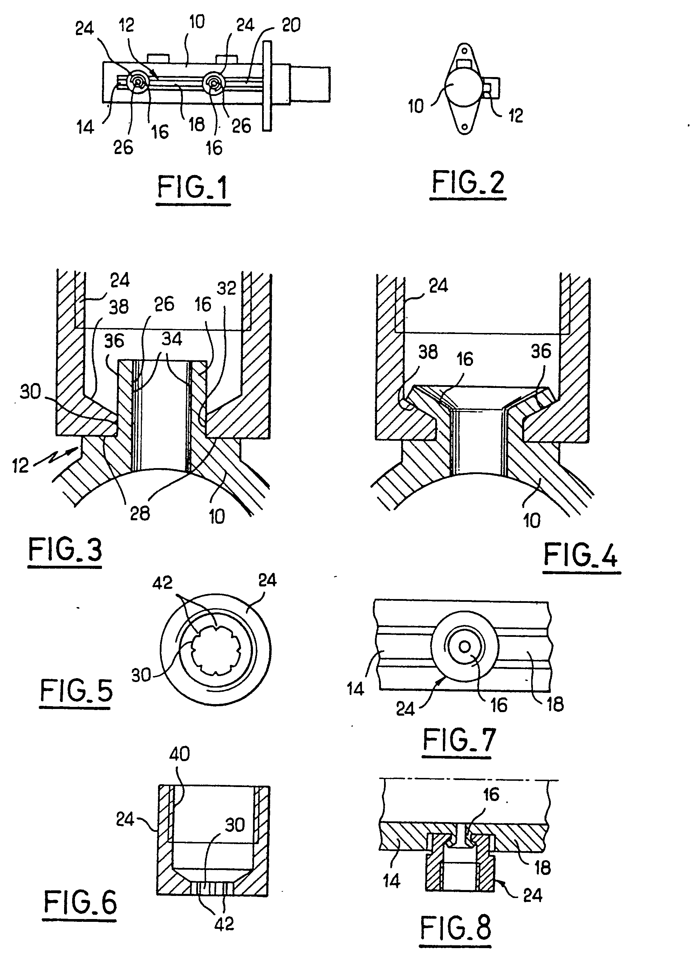

Comme représenté sur les figures, un élément tubulaire, qui dans l'exemple illustré est un maître-cylindre, comprend un corps creux 10. Le corps 10 est pourvu d'un profil extérieur en saillie 12. Le corps 10 et le profil 12 sont formés d'une seule pièce sous la forme d'un élément tubulaire extrudé, puis des parties du profil sont enlevées pour laisser des régions séparées 14, 16, 18 et 20. Deux de ces régions 16 forment chacune une protubérance cylindrique pour recevoir un élément d'interconnexion 24. Les deux protubérances 16 sont usinées pour former des perçages 26. Comme représenté sur la figure 3, le profil 12 comprend une surface d'appui 28 qui, parce que la protubérance 16 a une forme cylindrique, est sensiblement annulaire. L'élément d'interconnexion 24 prend appui contre la surface 28, la surface intérieure annulaire 30 de l'élément 24 étant en contact avec la surface extérieure 32 de la protubérance 16. Pour que l'élément d'interconnexion 24 soit retenu sur le corps 10, la paroi cylindrique 34 de la protubérance 156 est rabattue jusqu'à la position représentée à la figure 4 où la surface extérieure 36 de la protubérance prend appui contre la surface conique intérieure 38 de l'élément 24.

Sur les figures 5 à 8 est représenté un premier mode de réalisation pour empêcher l'élément d'interconnexion 24 de tourner autour de son axe longitudinal quand une tubulure de circuit de freinage est vissée dans la partie taraudée 40 de l'élément 24. La surface intérieure 30 de l'élément d'interconnexion est ici pourvue de plusieurs profils dentés 42 qui, quand l'élément 24 est emmanché à force sur la protubérance cylindrique 16, pénètrent la surface extérieure 36 de l'élément 16. La paroi cylindrique 34 de la protubérance 16 est rabattue comme avant pour retenir l'élément 24.

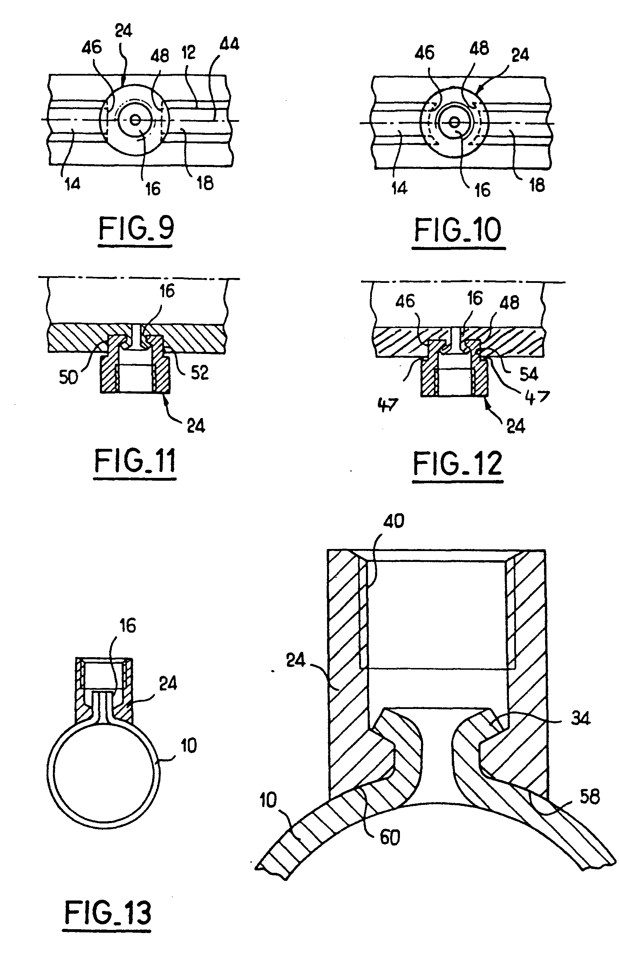

Dans le mode de réalisation des figures 9 et 11, les deux faces en regard des régions séparées 14, 18 du profil 12 sont formées perpendiculaires à l'axe longitudinal 44 du corps 10 du maître-cylindre et forment deux surfaces d'appui 46 et 48. L'élément d'interconnexion 24 est pourvu extérieurement de deux faces planes 50 et 52 qui, quand l'élément 24 est en position autour de la protubérance 16, viennent en contact avec les surfaces d'appui 46 et 48 et ainsi l'élément d'interconnexion 24 est empêche de tourner.

Sur les figures 10 et 12 est représenté un autre mode de réalisation dans lequel les deux faces 46 et 48 des régions séparées ont chacune la forme d'arc qui viennent en contact avec la surface extérieure cylindrique 54 de l'élément d'interconnexion 24. L'élément d'interconnexion 24 est formé avec deux lamages partiels pratiques dans la paroi latérale de l'élément 24 de façon à définir des logements 47 diamétralement opposés dans lesquels viennent s'engager les extrémités en regard du profil 14, 18 de part et d'autre de la protubérance 16. L'élément d'interconnexion est ainsi empêché de tourner.

Dans le mode de réalisation des figures 13 et 14, la protubérance 16 est formée directement par étirage local radialement vers l'extérieur d'un corps tubulaire extrudé 10. Comme dans les modes de réalisation précédents, l'élément d'interconnexion 24 est mis en place sur la protubérance cylindrique 16 et la paroi 34 est rabattue pour retenir l'élément 24 en place. L'élément d'interconnexion 24 a une surface inférieure 58 de forme sensiblement cylindrique qui vient en contact avec la surface cylindrique extérieure 60 du corps 10 et ainsi l'élément 24 est empêche de tourner.

On notera que, dans les différents modes de réalisation, l'extrémité évasée rabattue 34 de la protubérance 16 constitue à l'intérieur de l'élément d'interconnexion 24, un siège pour la tubulure vissée dans cet élément, assurant ainsi une parfaite étanchéité du montage.

**Revendications**

1. Procédé de formaton d'un raccordement hydraulique sur un corps creux (10), par montage d'un élément d'interconnexion (24) sur une protubérance (16) venue de matière avec le corps creux (10) et faisant saillie extérieurement par rapport à la paroi du corps et destinée à présenter un passage (26) communiquant avec l'intérieur du corps, le procédé comportant les étapes de former la protubérance (16) et le passage la traversant pour qu'elle présente au moins une partie extérieure tubulaire (16) à paroi mince (34) entourant le passage, d'enfiler l'élément d'interconnexion sur la surface extérieure de la partie tubulaire et de rabattre vers l'extérieur l'extrémité de cette paroi tubulaire caractérisé en ce que la surface intérieure (38) de l'extrémité en contact avec ledit corps (10) de l'élément d'interconnexion (24) affecte une forme conique, ladite extrémité de cette paroi tubulaire étant rabattue contre ladite surface intérieure conique (38) de l'élément d'interconnexion (24).

2. Procédé selon la revendication 1, caractérisé en ce que le corps (10) est formé par extrusion.

3. Procédé selon la revendication 1 ou 2, caractérisé en ce que la protubérance (16) est découpée dans un profil (12) extérieur en saillie du corps (10).

4. Procédé selon la revendication 1 ou 2, caractérisé en ce que la protubérance (16) est formée par étirage local de la paroi du corps (10).

5. Procédé selon l'une quelconque des revendications 1 à 4, caractérisé en ce qu'au moins une surface d'appui (28) est formée sur la surface extérieure du corps (10) qui coopère avec une surface correspondante sur l'élément d'interconnexion (24).

6. Procédé selon l'une des revendications 1 à 4, caractérisé en ce que l'élément d'interconnexion (24) et la protubérance (16) sont conformés pour présener des surfaces coopérantes additionnelles (46, 48); 50, 52; 47) immobilisant l'élément (24) en rotation par rapport au corps (10).

7. Procédé selon l'une des revendications 1 à 4, caractérisé en ce que l'élément d'interconnexion (24) est emmanché à force sur la poutre tubulaire (34) de la protubérance (16).

**Patentansprüche**

1. Verfahren zum Herstellen eines hydraulischen Anschlusses an einem hohlen Körper (10) durch Anbringen eines Verbindungselementes (24) an einem Vorsprung (16), der bezüglich der Wand des Körpers nach außen vorsteht und einen mit dem Körperinneren verbundenen Kanal (26) aufweist, wobei das Verfahren die Schritte umfaßt, den Vorsprung (16) und den ihn durchquerenden Kanal so herzustellen, daß er einen den Kanal umgebenden dünnwandigen (34) rohrförmigen Außenabschnitt (16) aufweist, das Verbindungselement auf die Außenfläche des rohrförmigen Abschnitts aufzuziehen, und das Ende dieser rohrförmigen Wand umzubiegen, dadurch agekennzeichnet, daß die Innenfläche (38) des mit dem Körper (10) in Berührung stehenden Endes des Verbindungselementes (24) eine konische Form erhält, wobei das besagte Ende dieser rohrförmigen Wand gegen die konische Innenfläche (38) des Verbindungselementes (24) umgebogen wird.

2. Verfahren nach Anspruch 1, dadurch gekennzeichnet, daß der Körper (10) durch Extrusion hergestellt wird.

3. Verfahren nach Anspruch 1 oder 2, dadurch gekennzeichnet, daß der Vorsprung (16) in ein vorstehendes Außenprofil (12) des Körpers (10) geschnitten wird.

4. Verfahren nach Anspruch 1 oder 2, dadurch gekennzeichnet, daß der Vorsprung (16) durch eine örtliche Ziehverformung der Wand des Körpers (10) hergestellt wird.

5. Verfahren nach einem der Ansprüche 1 bis 4, dadurch gekennzeichnet, daß an der Außenfläche des Körpers (10) mindestens eine Anlagefläche (28) gebildet wird, die mit einer entsprechenden Fläche am Verbindungselement (24) zusammenwirkt.

6. Verfahren nach einem der Ansprüche 1 bis 4, dadurch gekennzeichnet, daß das Verbindungselementes (24) und der Vorsprung (16) so ausgebildet sind, daß sie zusätzlich zusammenwirkende Flächen (46, 48; 50, 52; 47) aufweisen, die das Verbindungselementes (24) gegen eine Drehbewegung bezüglich des Körpers (10) sichern.

7. Verfahren nach einem der Ansprüche 1 bis 4, dadurch gekennzeichnet, daß das Verbindungselement (24) auf die rohrförmige Wand (34) des Vorsprungs (16) aufgepreßt wird.

**Claims**

1. Method of forming a hydraulic connection on a hollow body (10) by mounting a connection element (24) onto a projection (16) integral with the hollow body (10) and extending outwards with respect to the wall of the body and intended to present a passage (26) communicating with the interior of the body, the method comprising the steps of forming the projection (16) and the passage traversing it such as to present at least one tubular external thin wall (34) portion (16) surrounding the passage, fitting the connection element over the external surface of the tubular portion, and outwardly rebending the extremity of said tubular wall, characterized in that the internal surface (38) of the extremity engaging said body (10) of the connection element (24) has a conical shape, said extremity of this tubular wall being rebent against said conical internal surface (38) of the connection element (24).

2. Method according to Claim 1, characterised in that the body (10) is formed by extrusion.

3. Method according to Claim 1 or Claim 2, characterized in that the projection (16) is cut into an external projecting profile (12) of the body (10).

4. Method according to Claim 1 or Claim 2, characterized in that the projection (16) is formed by local deformation of the wall of the body (10).

5. Method according to any of Claims 1 to 4, characterized in that at least one engagement surface (28) is formed on the external surface of the body (10), which cooperates with a corresponding surface on the connection element (24).

6. Method according to any of Claims 1 to 4, characterized in that the connection element (24) and the projection (16) are conformed to present additional cooperating surfaces (46, 48; 50, 52; 47) preventing rotation of the element (24) with respect to the body (10).

7. Method according to any of Claims 1 to 4, characterized in that the connection element (24) is fitted on the tubular wall (34) of the projection (16).

FIG.1

FIG.2

FIG.3

FIG.4

FIG.5

FIG.6

FIG.7

FIG.8

1

FIG.9

FIG.10

FIG.11

FIG.12

FIG.13